(19) Europäisches Patentamt
European Patent Office
Office européen des brevets

(11) Veröffentlichungsnummer: **0 063 275**
**A1**

(12) # EUROPÄISCHE PATENTANMELDUNG

(21) Anmeldenummer: 82102759.6

(22) Anmeldetag: 01.04.82

(51) Int. Cl.³: C 09 B 29/42
D 06 P 3/00

(30) Priorität: 16.04.81 DE 3115440

(43) Veröffentlichungstag der Anmeldung:
27.10.82 Patentblatt 82/43

(84) Benannte Vertragsstaaten:
CH DE FR GB IT LI

(71) Anmelder: CASSELLA Aktiengesellschaft
Hanauer Landstrasse 526
D-6000 Frankfurt am Main 61(DE)

(72) Erfinder: Tappe, Horst, Dr.
Ringstrasse 9
D-6058 Dietzenbach(DE)

(72) Erfinder: Hertel, Hasso, Dr.
Brunnenweg 10
D-6052 Mühlheim/Main(DE)

(72) Erfinder: Roth, Kurt
Breckenheimer Strasse 35
D-6238 Hofheim(DE)

(74) Vertreter: Urbach, Hans-Georg, Dr. et al,
Hanauer Landstrasse 526
D-6000 Frankfurt am Main 61(DE)

(54) **Neuer Monoazofarbstoff, Verfahren zu seiner Herstellung und Verwendung.**

(57) Der wasserunlösliche Monoazofarbstoff der Formel I

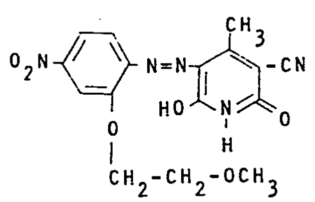

(I)

wird dadurch hergestellt, daß man das Amin der Formel II

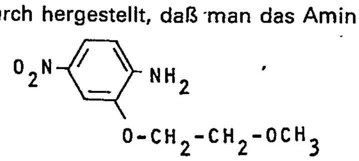

(II)

diazotiert und mit der Kupplungskomponente der Formel III

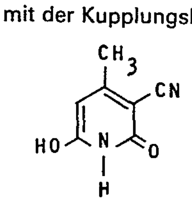

(III)

kuppelt. Der Farbstoff wird zum Färben und Bedrucken von hydrophoben, synthetischen Materialien verwendet.

EP 0 063 275 A1

Ref. 3213
Dr.Ur/St

# Neuer Monoazofarbstoff, Verfahren zu seiner Herstellung und Verwendung

Die Erfindung betrifft den Monoazofarbstoff der Formel I,

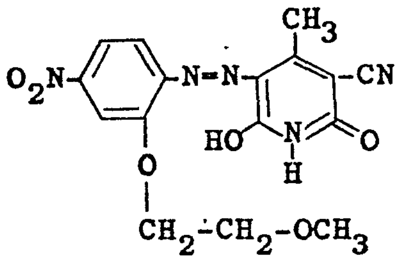

(I)

ein Verfahren zu seiner Herstellung und seine Verwendung zum Färben und Bedrucken von synthetischen, hydrophoben Fasermaterialien, insbesondere solchen aus Polyethylenglykolterephthalat, und deren Mischungen mit Cellulosefasern.

Die vorliegende Erfindung betrifft im Rahmen der Verwendung des erfindungsgemäßen Farbstoffs der Formel I zum Färben und Drucken auch seinen Einsatz bei der Herstellung von Ätzreservedrucken auf Textilmaterialien aus hydrophoben Fasern, vorzugsweise Polyesterfasern, und deren Mischungen mit Cellulosefasern.

Der erfindungsgemäße Farbstoff der Formel I kann in mehreren tautomeren Formen vorliegen. Im Rahmen der vorliegenden Erfindung werden unter dem erfindungsgemäßen Farbstoff auch seine möglichen Tautomeren verstanden.

Der neue Farbstoff wird erhalten, indem man ein Amin der Formel II

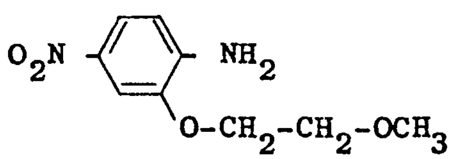

(II)

diazotiert und mit 3-Cyan-4-methyl-6-hydroxy-2-pyridon der Formel III

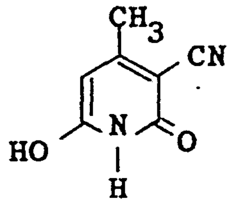

(III)

kuppelt.

Die Herstellung der Kupplungskomponente III kann zum Beispiel erfolgen nach den Angaben von Bobitt und Scola in J. Org. Chem. 25, 560 durch Kondensation von Acetessigsäureethylester mit Cyanacetamid in Gegenwart von Kaliumhydroxid in siedendem Methanol.

Das als Ausgangsprodukt benötigte Amin der Formel II ist technisch leicht zugänglich. Die Herstellung erfolgt beispielsweise so, daß man o-Nitro-chlorbenzol mit Natrium-β-methoxyethanolat zu der Nitroverbindung der Formel IV umsetzt, diese zum Amin der Formel V reduziert, dieses Amin dann mit p-Toluolsulfochlorid zur Verbindung der Formel VI umsetzt, nitriert und den Nitrokörper der Formel VII zum Ausgangsamin der Formel II verseift:

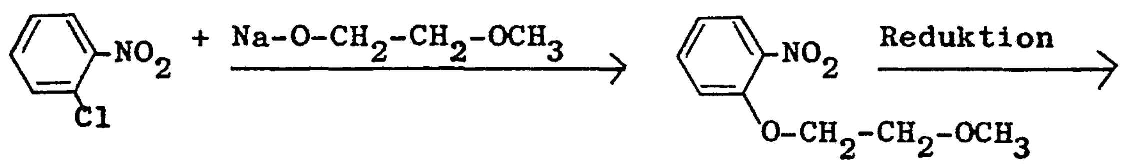


(IV)

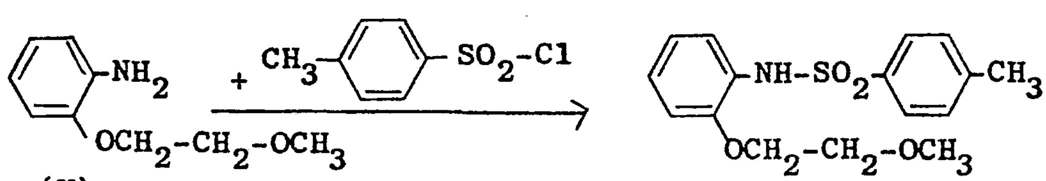

(V)

(VI)

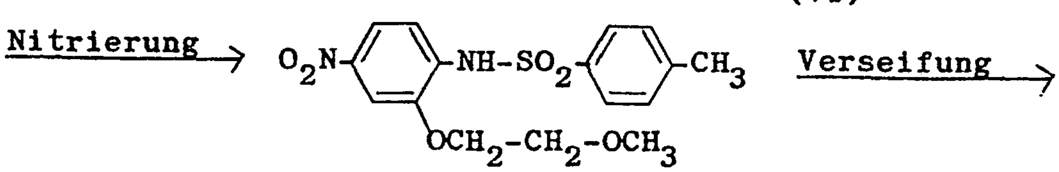


(VII)

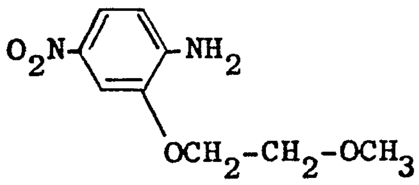

(II)

Der erfindungsgemäße Farbstoff der Formel I eignet sich vorzüglich zum Färben und Bedrucken von synthetischen, hydrophoben Fasermaterialien und Mischungen dieser Fasermaterialien mit Cellulosefasern. Bevorzugte hydrophobe Fasermaterialien sind solche aus aromatischen Polyestern oder Celluloseestern. Der erfindungsgemäße Farbstoff liefert hierauf nach den üblichen Färbe- und Druckverfahren farbstarke, goldgelbe Färbungen und Drucke mit sehr guten Echtheitseigenschaften, insbesondere sehr guter Licht- und Sublimierechtheit, sehr gutem Aufbauvermögen und sehr gutem Thermomigrierverhalten.

Das Bedrucken des genannten Fasergutes kann so durchgeführt werden, daß die mit dem Farbstoff der Formel I allein oder in Gemischen mit bekannten Dispersionsfarbstoffen bedruckte Ware in Gegenwart eines Carriers bei Temperaturen zwischen etwa 100 bis 110°C oder auch in Abwesenheit eines Carriers bei 110 bis 180°C gedämpft oder nach dem sogenannten Heißluftfixier- oder Thermofixierverfahren bei 180 bis 230°C behandelt wird.

Das Färben des genannten Fasergutes mit dem erfindungsgemäßen Farbstoff oder mit Farbstoffmischungen, die den erfindungsgemäßen Farbstoff enthalten, erfolgt zweckmäßigerweise aus wäßriger Suspension in Gegenwart von Carriern zwischen 80 bis 100°C, in Abwesenheit von Carriern zwischen 100 bis 140°C sowie nach dem sogenannten Thermofixierverfahren bei etwa 180 bis 230°C. Der erfindungsgemäße Farbstoff eignet sich für die genannten Substrate auch zum Färben aus organischen Lösungsmitteln oder zum Färben in der Masse.

Da der erfindungsgemäße Farbstoff der Formel I die Eigenschaft besitzt, weiß ätzbar zu sein, eignet er sich auch hervorragend zum Einsatz bei der Herstellung von Ätz- und Reserveeffekten zum Beispiel nach den Lehren der deutschen Offenlegungsschriften 28 36 391 und 28 56 283. Hiernach werden die Substrate mit Farbflotten, die neben üblichen Färbe- und Klotzhilfsmitteln den erfindungsgemäßen Farbstoff der Formel I allein oder zusammen mit anderen weißätzbaren Farbstoffen und gegebenenfalls ätzmittelbeständige Farbstoffe enthalten, imprägniert und nach Trocknen oder Antrocknen der geklotzten Materialien und anschließendem Aufdrucken einer Ätzreservepaste, die gewünschtenfalls neben dem Ätzmittel noch ätzmittelbeständige Farbstoffe enthält, einer anschließenden Wärmebehandlung bei Temperaturen von 100 bis 230°C unterworfen.
Die bei der Durchführung des erfindungsgemäßen Verfahrens einzusetzende Reservepaste enthält als Reservierungsmittel zum Beispiel ein Alkalisulfit oder ein Alkalitrichloracetat oder ein Alkalihydrogensulfit in Kombination mit Alkalicarbonat oder Alkalihydrogencarbonat oder ein Umsetzungsprodukt von Aldehyden oder Ketonen mit 2 bis 6 C-Atomen und Ammoniak oder primären oder sekundären Aminen im Molverhältnis 3:1 bis 1:1 oder Basen, die in 5%iger wäßriger Lösung mindestens einen pH-Wert von 8 hervorbringen.

Derartige Basen, die als Ätzmittel in der Ätzreservedruckpaste enthalten sind und die in 5%iger wäßriger Lösung mindestens einen pH-Wert von 8 hervorbringen, sind in großer Zahl bekannt. Beispiele für solche Basen sind die Hydroxide der Alkali- und Erdalkalimetalle, Salze von Erdalkali- und Alkalimetallen mit schwachen organischen oder anorganischen Säuren, Ammoniak oder auch aliphatische Amine, wie zum Beispiel Triäthyl-, Tripropyl- oder Tributylamin, Ethanolamin, Dimethyl- oder Diethylethanolamin, Diethanolamin, Methyl-, Ethyl- oder Propyl-diethanolamin oder Triethanolamin. Üblicherweise werden als Basen Erdalkalihydroxide, wie z.B. Calciumhydroxid, Alkalihydroxide, wie beispielsweise Natrium- oder Kaliumhydroxid, oder Alkalisalze mit schwachen anorganischen Säuren, wie beispielsweise

Alkalicarbonat oder Trialkaliphosphat eingesetzt. Vorzugsweise wird als Base in den Ätzreservedruckpasten Natrium- oder Kaliumhydroxid oder Natrium- oder Kaliumcarbonat oder Natrium- oder Kaliumbicarbonat verwendet.

Der erfindungsgemäße Farbstoff der Formel I liegt in den Klotzflotten bzw. in den Druckpasten in fein dispergierter Form vor, wie es für Dispersionsfarbstoffe üblich und bekannt ist. Auch die Herstellung der Klotzflotten bzw. Druckpasten, die erfindungsgemäß einzusetzen sind, erfolgt in an sich bekannter Weise durch Mischen der Flotten- bzw. Druckpastenbestandteile mit der nötigen Menge Wasser und den flüssigen feindispersen oder festen redispergierbaren Einstellungen des Farbstoffs der Formel I.

Beispiel:

a) 29,6 Gewichtsteile p-Nitro-ω-methoxy-o-phenetidin werden bei 0 - 5°C in 150 Teilen Wasser, 35 Teilen konzentrierter Salzsäure, 80 Teilen Eis und 19 Teilen 40%iger Natriumnitritlösungin 30 Minuten diazotiert. Die klare Diazolösung läßt man dann in eine Suspension von 15,7 Teilen 3-Cyan-4-methyl-6-hydroxy-2-pyridon in 400 Teilen Wasser, 120 Teilen 27%iger Natronlauge und 500 Teilen Eis einlaufen. Der entstandene Farbstoff wird nach beendeter Kupplung abfiltriert, mit Wasser gewaschen und getrocknet. Man erhält so 35,6 Teile des Farbstoffs der Formel I.

b) 1 Gewichtsteil des so erhaltenen, feindispergierten Farbstoffs der Formel I wird in 2000 Gewichtsteile Wasser eingerührt. Es wird mit Essigsäure auf einen pH-Wert von 5 bis 6 eingestellt und mit 4 Gewichtsteilen Ammoniumsulfat und 2 Gewichtsteilen eines handelsüblichen Dispergiermittels auf Basis eines Naphthalinsulfonsäure-Formaldehyd-Kondensats versetzt.
In die so erhaltene Farbflotte bringt man 100 Gewichtsteile eines Polyestergewebes auf Basis Polyethylenglykolterephthalat ein und färbt 1 1/2 Stunde bei 130°C.

Nach anschließendem Spülen, reduktiver Nachbehandlung mit einer 0,2%igen alkalischen Natriumdithionitlösung während 15 Minuten bei 70 bis 80°C, Spülen und Trocknen erhält man eine farbstarke, goldgelbe Färbung mit sehr guten coloristischen Eigenschaften, insbesondere einer sehr guten Licht- und Thermofixierechtheit und von einem guten Aufbauvermögen.

c) 30 Gewichtsteile des nach Absatz a) erhaltenen Farbstoffs der Formel I werden in feiner Verteilung einer Druckpaste, die 45 Gewichtsteile Johannisbrotkernmehl, 6 Gewichtsteile 3-nitro-benzolsulfonsaures Natrium und 3 Gewichtsteile Zitronensäure auf 1000 Gewichtsteile enthält, einverleibt. Mit dieser Druckpaste erhält man auf einem Triacetatgewebe nach dem Bedrucken, Trocknen und Fixieren durch Druckdämpfung während 15 Minuten bei 1,5 bar, Spülen und Fertigstellung wie im Absatz b) beschrieben, einen goldgelben Druck mit sehr guten Echtheitseigenschaften.

d) 30 Teile des nach Absatz a) erhaltenen Farbstoffs der Formel I werden in feiner Verteilung zu einer Klotzflotte gegeben, die auf 1000 Teile 947 Teile Wasser, 3 Teile Mononatriumphosphat und 20 Teile eines Polymerisationsprodukts auf Acrylsäurebasis als Antimigrationsmittel enthält. Man klotzt auf einem Zweiwalzenfoulard mit einer Flottenaufnahme von 60 % und trocknet vorsichtig bei 80 bis 100°C. Nach dem Trocknen wird mit einer Druckpaste, die 600 Teile einer wäßrigen, 10%igen Johannisbrotkernmehletherverdickung, 120 Teile Wasser, 80 Teile Natriumcarbonat 100 g Polyethylenglykol und 100 Teile Glycerin auf 1000 Teile enthält, überdruckt.
Nach dem Fixieren mit überhitztem Dampf während 7 Minuten bei 175°C, reduktivem Nachbehandeln, Seifen, anschließendem Spülen und Trocknen erhält man eine weißgeätzte goldgelbe Färbung mit sehr guten Echtheiten, vor allem Licht-, Trockenhitzefixier-, Reib- und Waschechtheiten. An den Stellen, auf die die sodahaltige Druckpaste aufgedruckt

war, bildet sich ein sehr guter Weißfond mit scharfen Konturen aus.

Patentansprüche

1) Wasserunlöslicher Monoazofarbstoff der Formel I

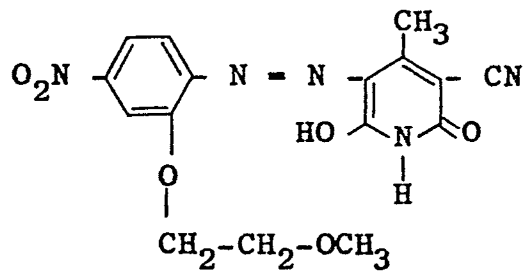

(I)

2) Verfahren zur Herstellung des in Anspruch 1 beschriebenen Farbstoffs der Formel I, dadurch gekennzeichnet, daß man das Amin der Formel II

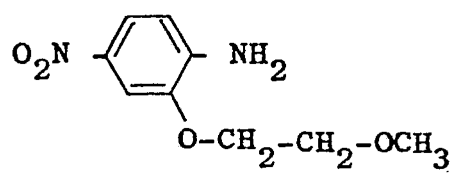

(II)

diazotiert und mit der Kupplungskomponente der Formel III

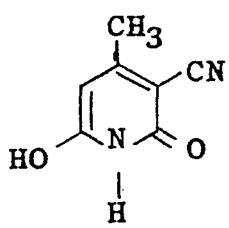

(III)

kuppelt.

3) Verfahren zum Färben und Bedrucken von Gebilden aus hydrophoben, synthetischen Materialien und Gemischen dieser Materialien mit Cellulosefasern, dadurch gekennzeichnet, daß man den in Anspruch 1 beschriebenen Farbstoff der Formel I verwendet.

4) Verfahren nach Anspruch 3, dadurch gekennzeichnet, daß als Substrat Gebilde aus Cellulose- 2 1/2-acetat, Cellulosetriacetat oder Polyestermaterialien, insbesondere Polyethylenglykolterephthalat oder analoger Polymerer, verwendet werden.

5) Verfahren nach Ansprüchen 3 und/oder 4, dadurch gekennzeichnet, daß der in Anspruch 1 beschriebene Farbstoff der Formel I im Rahmen eines Ätzreservedruckverfahrens eingesetzt wird.

6) Verfahren nach Anspruch 5, dadurch gekennzeichnet, daß die Ätzung in bekannter Weise mit Basen, insbesondere Alkalimetallhydroxiden oder -carbonaten oder -bicarbonaten durchgeführt wird.

7. Verfahren nach Anspruch 5, dadurch gekennzeichnet, daß die Ätzung in bekannter Weise mit einem Aldehyd-Alkalihydrogensulfit-Addukt, oder einem Aldehyd- oder Keton-Amin-Addukt oder Alkalitrichloracetat durchgeführt wird.

0063275

Europäisches Patentamt

# EUROPÄISCHER RECHERCHENBERICHT

Nummer der Anmeldung

EP 82 10 2759

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | FR-A-2 437 425 (BASF) *Seite 1, ganz; Seite 2, Zeile 12* & DE - A - 2 842 186 | 1-4 | C 09 B 29/42<br>D 06 P 3/00 |
| Y | FR-A-2 248 299 (CASSELLA) *Seite 1, Formel I, Seite 3, Zeile 1; Seite 9, Tabelle, Beispiel 18* & DE - A - 2 352 858 | 1-4 | |
| A | US-A-4 058 518 (HEINRICH, RIBKA) *Spalte 1, ganz* | 1 | |
| | ----- | | |

RECHERCHIERTE SACHGEBIETE (Int. Cl. 3)

C 09 B 29/00

Der vorliegende Recherchenbericht wurde für alle Patentansprüche erstellt.

| Recherchenort | Abschlußdatum der Recherche | Prüfer |
|---|---|---|
| DEN HAAG | 13-07-1982 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82